# EUROPÄISCHE PATENTANMELDUNG

(11) **EP 2 148 055 A1**
(43) Veröffentlichungstag der Anmeldung: **27.01.2010**
(21) Anmeldenummer: 09008279.3
(22) Anmeldetag: 24.06.2009
(51) Int. Cl.: F01N 3/28, B01F 5/06, F02K 1/38

(54) **Abgasanlage**

(30) Priorität: 21.07.2008 DE 102008033984
(71) Anmelder: Friedrich Boysen GmbH & Co. KG, 72213 Altensteig (DE)
(72) Erfinder: Mueller, Michael, 72202 Nagold (DE)
(74) Vertreter: Manitz, Finsterwald & Partner GbR

(57) **Zusammenfassung**

Abgasanlage für Verbrennungsmotoren mit mindestens einem Abgaskanal (1), insbesondere Abgasrohr, und einer dem Abgaskanal (1) nachgeordneten Abgasbehandlungseinrichtung wie Oxidationskatalysator, SCR-Katalysator oder Dieselpartikelfilter, wobei zur Verbesserung des Wirkungsgrades nachgeschalteter Abgasbehandlungseinrichtungen in dem Abgaskanal (1) mindestens ein Nebenstromkanal (4), insbesondere Nebenstromrohr, mit gegenüber dem Abgaskanal verringertem Querschnitt vorgesehen ist, welcher einem Teil des Abgasstroms eine Zwangsführung abweichend vom eigentlichen Abgasstrom erteilt.

## Beschreibung

Die vorliegende Erfindung betrifft eine Abgasanlage für Verbrennungsmotoren mit mindestens einem Abgaskanal, insbesondere Abgasrohr, und einer dem Abgaskanal nachgeordneten Abgasbehandlungseinrichtung wie Oxidationskatalysator, SCR-Katalysator oder Dieselpartikelfilter.

Verbrennungsmotoren stoßen einen Abgasstrom in die Atmosphäre aus, der verschiedene Arten von Schadstoffen enthält. Zur Verhinderung des Schadstoffausstoßes sind diverse Vorrichtungen zur Abgasnachbehandlung entwickelt worden. Beispielsweise werden Katalysatoren zum Umwandeln von schädlichen gasförmigen Stoffen in harmlose Komponenten sowie Partikelfilter zum Auffangen unerwünschter Feststoffpartikel eingesetzt. Der Abgasstrang eines Dieselmotors kann beispielsweise mit einem Oxidationskatalysator und einem stromabwärts davon angeordneten Partikelfilter versehen sein. Rußpartikel, die sich in dem Abgasstrom befinden, werden von dem Partikelfilter aufgefangen und in diesem eingelagert. Ab einer bestimmten Menge muss der angesammelte Ruß aus dem Partikelfilter entfernt werden, damit der Abgasausstoß nicht unzulässig stark behindert wird. Dieser Vorgang wird Regeneration genannt.

Die Regeneration des Partikelfilters erfolgt insbesondere durch Verbrennen des Rußes, wofür eine Mindesttemperatur des Partikelfilters erforderlich ist. Die Abgastemperatur ist jedoch nicht in allen Betriebszuständen des Verbrennungsmotors ausreichend hoch. Es ist daher auch bekannt, im Abgasstrang einen Brenner vorzusehen, durch den die Abgastemperatur angehoben werden kann, um den Ruß im Partikelfilter zu verbrennen. Auch ist es bekannt, in das Abgas Kraftstoff einzudüsen, der im Oxidationskatalysator exotherm reagiert und dadurch das Abgas aufheizt. Auch hierfür ist jedoch eine Mindesttemperatur des Abgases erforderlich, da unterhalb einer so genannten Light-Off-Temperatur keine exotherme Reaktion des Kraftstoffs im Oxidationskatalysator stattfindet.

Des Weiteren werden Stickoxidkatalysatoren verwendet, um die im Abgas enthaltenen Stickoxide in einer so genannten selektiven katalytischen Reaktion zu Stickstoff und Wasser zu reduzieren. Diese Katalysatoren werden daher als SCR-Katalysatoren bezeichnet. Dabei ist es erforderlich, in das Abgas ein Reduktionsmittel einzuspritzen, um die selektive katalytische Reduktion zu erreichen. Hierfür wird insbesondere ein Wasser-Harnstoff-Gemisch verwendet, dessen Harnstoff im Abgas zu Ammoniak zerfällt, welches mit den Stickoxiden reagiert.

Der Erfindung liegt die Aufgabe zugrunde, eine Abgasanlage der eingangs genannten Art bezüglich ihrer Reinigungswirkung für das Abgas zu verbessern. Insbesondere soll der Wirkungsgrad der Abgasbehandlungseinrichtung erhöht werden.

Diese Aufgabe wird bei einer Abgasanlage der eingangs genannten Art dadurch gelöst, dass in dem Abgaskanal mindestens ein Nebenstromkanal, insbesondere Nebenstromrohr, mit gegenüber dem Abgaskanal verringertem Querschnitt vorgesehen ist, welcher einem Teil des Abgasstroms eine Zwangsführung abweichend vom eigentlichen Abgasstrom erteilt.

Die Erfindung beruht auf der Erkenntnis, dass das Abgas im Abgaskanal über dessen Querschnitt unterschiedliche Eigenschaften aufweist. Insbesondere ist das Abgas im Zentrum des Abgaskanals deutlich heißer als in den peripheren Bereichen. Durch eine Zwangsführung kann erreicht werden, dass heißes Abgas vom Zentrum nach außen gelangt. Dies ist beispielsweise dann vorteilhaft, wenn am Abgaskanal eine Eingabestelle, beispielsweise eine Kraftstoff- oder Reduktionsmitteleinspritzstelle vorgesehen ist. Mindestens ein Nebenstromkanal ist dann bevorzugt zu einer solchen Eingabestelle geführt, und die Eingabe erfolgt in den Nebenstromkanal. Dadurch wird der Kraftstoff oder das Reduktionsmittel in den Nebenstrom des Abgases eingegeben, der eine deutlich höhere Temperatur aufweist als der periphere Abgasstrom, der sich ansonsten im Bereich der Eingabestelle befinden würde. Auch für die Reduktionsmitteleingabe in den Abgasstrom ist die erhöhte Temperatur des Nebenstroms vorteilhaft.

Ein weiterer Vorteil der Zwangsführung besteht darin, dass ein Teilabgasstrom auch vom peripheren Außenbereich des Abgaskanals nach innen geführt werden kann. Dies ist beispielsweise wichtig, um eine nachfolgende Einrichtung zentral anzuströmen, beispielsweise eine nachgeschaltete Vorrichtung zur Durchmischung des Abgasstroms, um eine gleichmäßige Temperaturverteilung zu erreichen.

Ein weiterer Vorteil der Zwangsführung durch mindestens einen Nebenstromkanal besteht darin, dass die Strömungsführung unabhängig vom Betriebszustand des Verbrennungsmotors, insbesondere von seinem Lastpunkt ist.

Nach einer bevorzugten Ausgestaltung der Erfindung sind mehrere Nebenstromkanäle vorgesehen. Der Zwangsführungseffekt kann dadurch verstärkt werden. Die Nebenstromkanäle können dabei über den Durchmesser des Abgaskanals gleichmäßig oder ungleichmäßig verteilt sein, je nach Anwendungsfall.

Nach einer weiteren Ausgestaltung der Erfindung können ein oder mehrere Nebenstromkanäle in Abgasstromrichtung gesehen ein- oder mehrfach verzweigt ausgebildet sein. Durch diese Verzweigung kann eine weitere Aufteilung des Abgasstroms erfolgen. Zum einen kann dadurch der Abgasstrom homogenisiert werden, und zum anderen kann der Abgasstrom noch gezielter auf eine nachfolgende Vorrichtung ausgerichtet werden, beispielsweise eine nachgeschaltete Mischeinrichtung.

Des Weiteren können in einem oder mehreren Nebenstromkanälen Mittel zur Drallerzeugung angeordnet sein, insbesondere vor einer Eingabestelle für Zugabestoffe wie Kraftstoff oder Reduktionsmittel. Durch die Drallerzeugungseinrichtung wird das Abgas durchmischt und dadurch die Wirkung des Zugabestoffes verbessert.

Für bestimmte Anwendungsfälle ist es des Weiteren vorteilhaft, wenn in einem oder mehreren Nebenstromkanälen Verdampfungselemente für flüssige Zugabestoffe wie Harnstoff angeordnet sind, insbesondere nach einer Eingabestelle für solche Zugabestoffe. Damit kann die Feinverteilung der Zugabestoffe im Abgasstrom weiter verbessert werden.

Durch Neigung des Austrittsendes mindestens eines Nebenstromkanals in Bezug auf die Hauptabgasstromrichtung kann die Zwangsführung weiter variiert werden. Insbesondere können nachgeschaltete Einrichtungen noch besser angeströmt werden.

Eine weitere Verbesserung der Durchmischung kann sich dadurch ergeben, dass am Austrittsende mindestens eines Nebenstromkanals eine Einrichtung zur Turbulenzerzeugung wie Wirbelblech, Drallvorrichtung oder dergleichen vorgesehen ist. Damit kann die Durchmischung des Abgasstroms weiter erhöht und die Wirkung von Zugabestoffen verbessert werden. Auch die Homogenisierung der Abgastemperatur kann hierdurch verbessert werden.

Ausführungsbeispiele der Erfindung sind in den Zeichnungen dargestellt und werden nachfolgend beschrieben. Es zeigen, jeweils in schematischer Darstellung,
- Fig. 1: ein Längsschnitt durch einen Teil einer erfindungsge- mäßen Abgasanlage,
- Fig. 2: eine perspektivische Ansicht des Innenteils von Fig. 1,
- Fig. 3: einen Längsschnitt durch einen Teil einer Variante der erfindungsgemäßen Abgasanlage, und
- Fig. 4: eine perspektivische Ansicht des Innenteils von Fig. 3.

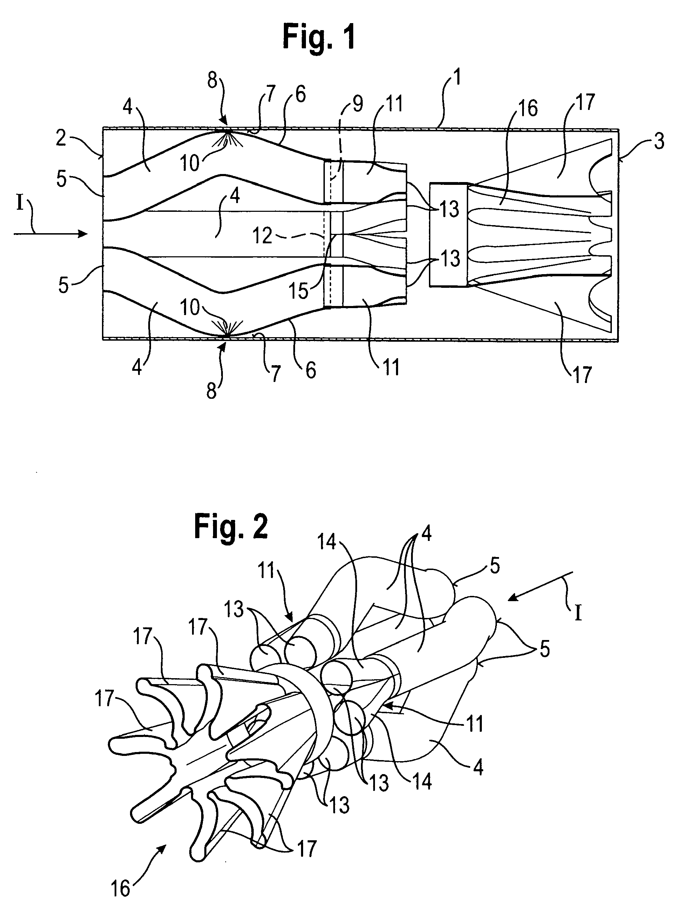

Fig. 1 zeigt einen Teil eines Abgasrohres 1 einer Abgasanlage mit einer Abgaseinströmseite 2 und einer Abgasausströmseite 3. Der in Fig. 1 dargestellte Abschnitt einer erfindungsgemäßen Abgasanlage kann grundsätzlich an beliebiger Stelle der Abgasanlage vorgesehen sein, bevorzugt ist jedoch die Anordnung vor einer Abgasbehandlungseinrichtung wie Oxidationskatalysator, SCR-Katalysator oder Dieselpartikelfilter.

Im Inneren des Rohrabschnitts 1 von Fig. 1 sind vier Nebenstromrohre 4 angeordnet, deren Abgaseintrittsöffnungen 5 in einem zentralen Bereich des Querschnitts des Abgasrohrs 1 angeordnet ist. Wie man in Fig. 1 erkennt, sind die Nebenstromrohre 4 ausgehend von ihren Eintrittsöffnungen 5 nach radial außen gebogen ausgeführt und berühren mit ihrer Wand 6 die Innenwand 7 des Abgasrohrs 1 in einem Berührungsbereich 8. Ausgehend von dem Berührungsbereich 8 sind die Nebenstromrohre 4 wieder gebogen zum zentralen Bereich des Querschnitts des Abgasrohrs 1 zurückgeführt, wo sie ihre Austrittsöffnungen 9 aufweisen.

Im Berührungsbereich 8 der Nebenstromrohre 4 mit dem Abgasrohr 1 sind Eingabestellen für Zugabestoffe vorgesehen, beispielsweise Eindüsstellen für Kraftstoff oder Reduktionsmittel, wie Harnstoff. Das Eindüsen ist durch sternförmige Striche 10 angedeutet.

Wie man insbesondere in Fig. 2 erkennt, sind in die Austrittsenden 9 der Nebenstromrohre 4 Zweigrohre 11 eingesetzt. Die Zweigrohre 11 sind bei diesem Ausführungsbeispiel in Art eines Hosenrohres ausgebildet, welches eine Eintrittsöffnung 12 und zwei Austrittsöffnungen 13 aufweist. Wie in Fig. 1 dargestellt, können die beiden Teilrohre 14 des Hosenrohres 11 von der Eintrittsöffnung 12 bis zur Austrittsöffnung 13 durch eine Wand 15 getrennt sein.

Auf der abgasstromabwärtigen Seite der Nebenstromrohre 4 ist im Abgasrohr 1 eine Mischeinrichtung 16 angeordnet. Diese ist in Art eines Blütenmischers ausgebildet, wie er beispielsweise für Strahltriebwerke genutzt und in der EP 1 451 461 B1 beschrieben ist. Durch die Mischeinrichtung 16 wird der Abgasstrom im Abgasrohr 1 über seinen Querschnitt vermischt, so dass sich die unterschiedlichen Temperaturen, insbesondere zwischen zentralem Bereich und peripherem Bereich des Abgasstroms ausgleichen. Wie man in Fig. 2 erkennt, sind dabei die Austrittsöffnungen 13 der Zweigrohre 11 der Nebenstromrohre 4 so angeordnet, dass sie optimal auf die Mischerflächen 17 der Mischeinrichtung 16 auftreffen. Dadurch wird eine besonders gute Durchmischung des Abgasstroms erreicht.

Wie eingangs erläutert, wird durch die Nebenstromrohre 4 eine Zwangsführung eines Teils des gemäß Pfeil I einströmenden Abgasstroms im Abgasrohr 1 erreicht. Die Teilabgasströme werden zunächst zu den Eingabestellen 8 geführt, wo Zugabestoffe in die Nebenabgasströme eingegeben werden. Von diesen Eingabestellen 8 werden die Teilabgasströme durch die Nebenstromrohre 4 zurück zum zentralen Bereich des Abgasrohrs 1 geführt und in Bezug auf die nachgeschaltete Mischeinrichtung 16 optimal ausgerichtet. Dabei wird die Ausrichtung, wie beschrieben, durch die Zweigrohre 11 begünstigt. Auf der abgasstromabwärtigen Seite der Mischeinrichtung 16 tritt somit ein homogenisierter Abgasstrom mit gut verteilten Zugabestoffen aus. Dieser Abgasstrom kann dann insbesondere einem Oxidationskatalysator, einem SCR-Katalysator oder einem Dieselpartikelfilter zugeführt werden. Durch die gute Durchmischung des Abgasstroms mit den Zugabestoffen ergibt sich eine hohe Wirkung dieser nachgeschalteten Abgasbehandlungseinrichtung.

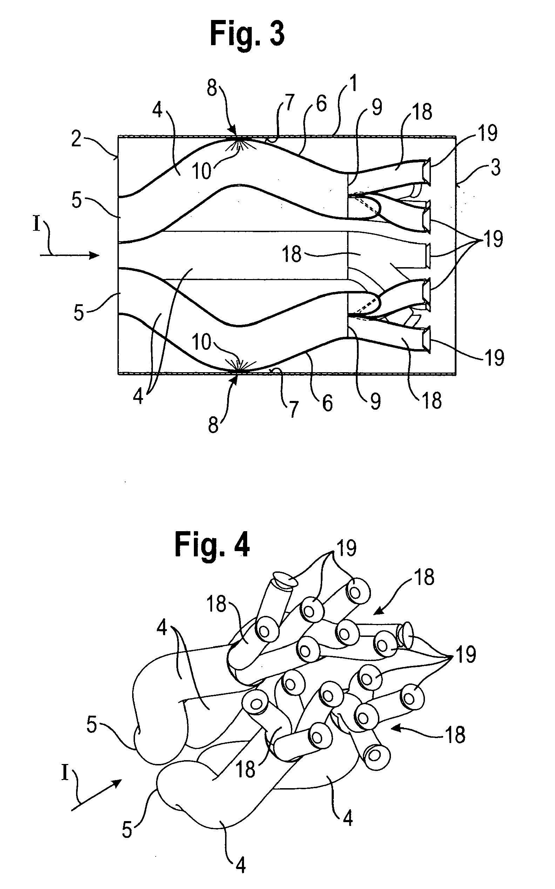

Die in den Fig. 3 und 4 dargestellte Variante stimmt bezüglich der Nebenstromrohre 4 weitgehend mit der Variante von Fig. 1 überein. Die Nebenstromrohre 4 sind auch hier ausgehend von ihren Abgaseintrittsöffnungen 5 zunächst gekrümmt radial nach außen zu Berührungsbereichen 8 mit dem Abgasrohr 1 und von dort ebenfalls gekrümmt nach radial innen zurück bis zu ihren Abgasaustrittsöffnungen 9 geführt. Im Unterschied zu der Variante der Fig. 1 und 2 sind in die Abgasaustrittsöffnungen 9 bei der Variante der Fig. 3 und 4 Zweigrohre 18 eingesetzt, die jeweils vier Austrittsöffnungen 19 aufweisen. Die Austrittsöffnungen 19 der Zweigrohre 18 sind so angeordnet, dass sich eine möglichst gleichmäßige Verteilung und Durchmischung des austretenden Abgasstromes über den gesamten Querschnitt des Abgasrohrs 1 ergibt. Aufgrund dieser Verteilung und Durchmischung des Abgasstroms durch die Zweigrohre 18 kann bei dieser Variante auf eine nachgeschaltete Mischeinrichtung verzichtet werden.

Die Wirkungsweise der zweiten Variante entspricht derjenigen der ersten Variante. Auch hier wird ein Teil des Abgasstroms ausgehend von den Eintrittsöffnungen 5 der Nebenstromrohre 4 radial nach außen zwangsgeführt, wo Zugabestoffe eingegeben werden können, und von dort zurück radial nach innen, von wo aus der Abgasstrom über die Zweigrohre 18 verteilt wird. Der verteilte und durchmischte Abgasstrom mit den Zusatzstoffen kann dann wieder einer nachgeschalteten Abgasbehandlungseinrichtung zugeführt werden.

Durch die erfindungsgemäße Abgasanlage ergibt sich somit eine verbesserte Abgasbehandlung mit hohem Wirkungsgrad.

### Bezugszeichenliste

- 1: Abgasrohr
- 2: Eintrittsseite von 1
- 3: Austrittsseite von 1
- 4: Nebenstromrohr
- 5: Eintrittsöffnung von 4
- 6: Wand von 4
- 7: Innenwand von 1
- 8: Berührungsstelle
- 9: Austrittsöffnung von 4
- 10: Einspritzung
- 11: Zweigrohr
- 12: Eintrittsöffnung von 11
- 13: Austrittsöffnung von 11
- 14: Teilrohr von 11
- 15: Trennwand
- 16: Mischeinrichtung
- 17: Mischfläche
- 18: Zweigrohr
- 19: Austrittsöffnung
- I: Abgasstromrichtung

## Patentansprüche

1. Abgasanlage für Verbrennungsmotoren mit mindestens einem Abgaskanal, insbesondere Abgasrohr (1), und einer dem Abgaskanal (1) nachgeordneten Abgasbehandlungseinrichtung wie Oxidationskatalysator, SCR-Katalysator oder Dieselpartikelfilter,
**dadurch gekennzeichnet, dass**
in dem Abgaskanal (1) mindestens ein Nebenstromkanal, insbesondere Nebenstromrohr (4), mit gegenüber dem Abgaskanal (1) verringertem Querschnitt vorgesehen ist, welcher einem Teil des Abgasstroms eine Zwangsführung abweichend vom eigentlichen Abgasstrom erteilt.

2. Abgasanlage nach Anspruch 1,
**dadurch gekennzeichnet, dass**
der Nebenstromkanal (4) so ausgebildet und angeordnet ist, dass ein Teilabgasstrom vom zentralen Bereich des Abgaskanals (1) nach radial außen geführt wird.

3. Abgasanlage nach Anspruch 1 oder 2,
**dadurch gekennzeichnet, dass**
der Nebenstromkanal (4) so ausgebildet und angeordnet ist, dass ein Teilabgasstrom von außen nach radial innen zum zentralen Bereich des Abgaskanals (1) geführt wird.

4. Abgasanlage nach einem der vorhergehenden Ansprüche,
**dadurch gekennzeichnet, dass**
ein Teilabgasstrom zu einer peripheren Eingabestelle (8), insbesondere Kraftstoff- oder Reduktionsmitteleinspritzstelle, oder einem Brenner geführt ist.

5. Abgasanlage nach einem der vorhergehenden Ansprüche,
**dadurch gekennzeichnet, dass**
abgasstromabwärts des Nebenstromkanals (4) eine Vorrichtung (16) zur Durchmischung des Abgases, insbesondere ein so genannter Blütenmischer, angeordnet ist.

6. Abgasanlage nach einem der vorhergehenden Ansprüche,
**dadurch gekennzeichnet, dass**
mehrere Nebenstromkanäle (4) gleichmäßig über den Querschnitt des Abgaskanals (1) verteilt angeordnet sind.

7. Abgasanlage nach einem der vorhergehenden Ansprüche,
**dadurch gekennzeichnet, dass**
mehrere Nebenstromkanäle (4) ungleichmäßig über den Querschnitt des Abgaskanals (1) verteilt angeordnet sind.

8. Abgasanlage nach einem der vorhergehenden Ansprüche,
**dadurch gekennzeichnet, dass**
ein oder mehrere Nebenstromkanäle (4) in Abgasstromrichtung (I) ein- oder mehrfach verzweigt ausgebildet sind.

9. Abgasanlage nach einem der vorhergehenden Ansprüche,
**dadurch gekennzeichnet, dass**
in einem oder mehreren Nebenstromkanälen (4) Mittel zur Drallerzeugung angeordnet sind, insbesondere vor einer Eingabestelle (8) für Zugabestoffe, wie Kraftstoff oder Reduktionsmittel.

10. Abgasanlage nach einem der vorhergehenden Ansprüche,
**dadurch gekennzeichnet, dass**
in einem oder mehreren Nebenstromkanälen (4) Verdampfungselemente für flüssige Zugabestoffe wie Harnstoff angeordnet sind, insbesondere nach einer Eingabestelle (8) für die Zugabestoffe.

11. Abgasanlage nach einem der vorhergehenden Ansprüche,
**dadurch gekennzeichnet, dass**
das Austrittsende (9) mindestens eines Nebenstromkanals (4) zur Hauptabgasstromrichtung (I) geneigt ist.

12. Abgasanlage nach einem der vorhergehenden Ansprüche,
**dadurch gekennzeichnet, dass**
am Austrittsende (13, 19) mindestens eines Nebenstromkanals (4) eine Einrichtung zur Turbulenzerzeugung wie Wirbelblech, Drallvorrichtung oder dergleichen, vorgesehen ist.
